# FASCICULE DE BREVET EUROPEEN

(11) **EP 2 435 662 B1**
(45) Date de publication et mention de la délivrance du brevet: **16.08.2017**
(21) Numéro de dépôt: 10728803.7
(22) Date de dépôt: 21.05.2010
(51) Int. Cl.: F01D 5/02, F01D 5/06

(54) **TURBINE BASSE-PRESSION**
NIEDERDRUCKTURBINE
LOW-PRESSURE TURBINE

(30) Priorité: 28.05.2009 FR 0902584
(43) Date de publication de la demande: 04.04.2012
(73) Titulaire: Snecma, 75015 Paris (FR)
(72) Inventeur: BELMONTE, Olivier, F-77550 Moissy Cramayel Cedex (FR); GILLANT, Grégory, Nicolas, Gérald, F-77550 Moissy Cramayel Cedex (FR)
(74) Mandataire: Ramey, Daniel
(86) Numéro de dépôt international: PCT/FR2010/050992
(87) Numéro de publication internationale: WO 2010/136707

(56) Documents cités:
- EP-A1- 1 584 784
- EP-A2- 1 199 439
- FR-A1- 2 797 906

## Description

L'invention concerne une turbine basse pression de turbomachine, comprenant des disques aubagés reliés à un arbre de turbine par un cône tourillon qui sert au positionnement axial des disques de turbine, à la transmission d'un couple moteur et au support de différents organes d'étanchéité.

Les disques de turbine sont fixés au cône tourillon par des brides annulaires festonnées, qui se trouvent à la périphérie interne des disques de turbine et à la périphérie externe du cône tourillon, respectivement, et qui sont formées d'une alternance de parties creuses et de parties pleines, les parties creuses permettant de réduire la masse, les parties pleines comportant des trous de passage d'organes de fixation tels que des boulons.

De façon générale, les parties pleines des brides festonnées sont délimitées par des arrondis convexes qui sont reliés par des arrondis concaves à la périphérie interne d'un disque de turbine ou à la périphérie externe du cône tourillon, respectivement.

Lors du fonctionnement de la turbomachine, la transmission d'un couple moteur des disques de turbine à l'arbre de turbine, par l'intermédiaire du cône tourillon, provoque des concentrations de contraintes à la base des parties pleines des brides festonnées, avec un risque de cisaillement de ces parties pleines, les contraintes étant en traction d'un côté et en compression de l'autre côté de chaque partie pleine des brides festonnées.

L'invention a notamment pour but d'éviter cet inconvénient de la technique connue.

Le document EP 1 584 784 divulgue une turbine basse pression de l'art antérieur.

L'invention propose une turbine basse pression de turbomachine, comprenant des disques aubagés reliés par un cône tourillon à un arbre de turbine, les disques aubagés et le cône tourillon comprenant à leurs périphéries interne et externe, respectivement, des brides annulaires festonnées formées d'une alternance de parties pleines et de parties creuses, les parties pleines comportant des trous de passage d'organes de fixation, caractérisée en ce que chaque partie pleine d'une bride précitée est raccordée à la périphérie du disque ou du cône tourillon, respectivement, par deux arrondis concaves qui sont dissymétriques, ayant des rayons de courbure différents, le rayon de courbure de l'arrondi concave qui se trouve en avant par rapport au sens de rotation étant inférieur au rayon de courbure de l'autre arrondi concave pour le cône tourillon (et inversement pour les disques de turbine).

La dissymétrie des raccordements des parties pleines des brides permet de renforcer les zones de ces brides qui sont les plus sollicitées en fonctionnement, d'équilibrer les contraintes de chaque côté des parties pleines des brides, de limiter leurs déformations et d'augmenter leur durée de vie.

Dans un exemple de réalisation, le rayon de courbure de l'arrondi concave qui se trouve en avant par rapport au sens de rotation est 2 à 2,8 fois plus petit que le rayon de courbure de l'autre arrondi concave des parties pleines des brides festonnées.

L'invention propose également un disque de turbine basse pression, conforme aux caractéristiques de la revendication 3, caractérisé en ce qu'il comprend une bride annulaire festonnée dont les parties pleines sont raccordées à la périphérie du disque par deux arrondis concaves qui sont dissymétriques et ont des rayons de courbure différents, , le rayon de courbure de l'arrondi concave qui se trouve en avant par rapport au sens de rotation est inférieur au rayon de courbure de l'autre arrondi concave pour le cône tourillon (et inversement pour les disques de turbine).

L'invention propose également un cône tourillon de turbine basse pression, conforme aux caractéristiques de la revendication 4, comprenant une bride annulaire festonnée dont les parties pleines sont raccordées à la périphérie du cône tourillon par des arrondis concaves qui sont dissymétriques et ont des rayons de courbure différents, le rayon de courbure de l'arrondi concave qui se trouve en avant par rapport au sens de rotation étant inférieur au rayon de courbure de l'autre arrondi concave pour le cône tourillon (et inversement pour les disques de turbine).

L'invention concerne encore une turbomachine, caractérisée en ce qu'elle comprend une turbine basse pression telle que décrite ci-dessus.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une demi vue schématique en coupe axiale d'une turbine basse pression selon l'invention ;
- la figure 2 est une vue partielle en perspective et en coupe représentant les brides de fixation des disques de turbine et du cône tourillon ;
- la figure 3 est une vue schématique partielle à plus grande échelle d'une partie pleine de la bride festonnée du cône tourillon.

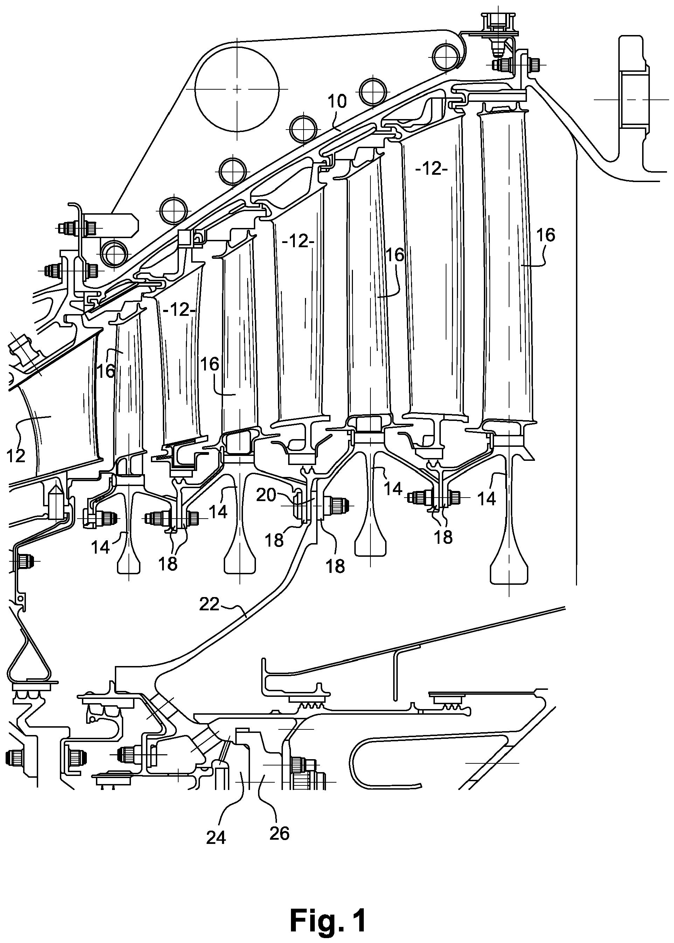

On se réfère d'abord à la figure 1 qui représente schématiquement une turbine basse pression selon l'invention, dans une turbomachine telle qu'un turboréacteur ou un turbopropulseur d'avion.

De façon connue, la turbine basse pression comprend plusieurs roues de turbine disposées en série à l'intérieur d'un carter 10, chaque roue se trouvant en aval d'un distributeur fixe 12 et comprenant un disque 14 portant à sa périphérie externe des aubes 16.

Dans l'exemple représenté, la turbine basse pression comprend quatre disques 14 dont les aubes sont de longueur progressivement croissante de l'amont vers l'aval par rapport au sens d'écoulement des gaz sortant de la chambre de combustion de la turbomachine.

Le disque 14 le plus en amont comporte, sur son côté aval, une bride annulaire 18 par laquelle il est fixé sur une bride annulaire amont du disque suivant de la turbine.

Le disque 14 le plus en aval comporte une bride annulaire amont 18 par laquelle il est fixé sur une bride annulaire aval du disque 14 précédent de la turbine.

Les deux disques intermédiaires 14 comprennent chacun une bride annulaire 18 de fixation sur une bride annulaire 20 d'un cône tourillon 22 disposé radialement à l'intérieur des disques de turbine 14 et qui comprend à son extrémité radialement interne une bride annulaire 24 de fixation sur une bride annulaire 26 d'un arbre de turbine.

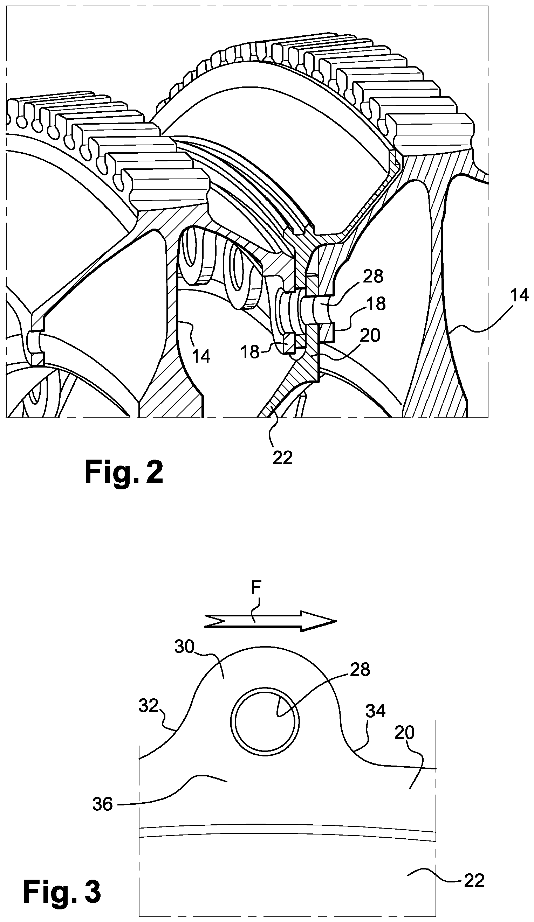

Comme on le voit mieux en figure 2, les brides annulaires 18 des disques 14 et 20 du cône tourillon 22 sont festonnées, c'est-à-dire qu'elles sont formées d'une alternance de parties pleines et de parties creuses, les parties pleines ayant une forme arrondie convexe et comportant des orifices 28 de passage d'organes de fixation tels que des boulons.

Chaque partie pleine 30 d'une bride annulaire festonnée d'un disque de turbine 14 ou du cône tourillon 22 est raccordée à la périphérie du disque 14 ou du cône tourillon par deux arrondis concaves 32, 34 respectivement (figure 3).

Selon l'invention, ces deux arrondis concaves 32, 34 sont dissymétriques, leur dissymétrie ayant pour but d'uniformiser les contraintes dans la base 36 de la partie pleine 30, ces contraintes étant dues à la transmission d'un couple moteur entre les disques de turbine et l'arbre de turbine lors du fonctionnement de la turbomachine.

Le sens de rotation de la turbine étant désigné par la flèche F en figure 3, les contraintes qui se concentrent au voisinage de l'arrondi concave 34 qui se trouve en avant par rapport au sens de rotation, sont des contraintes de compression et celles qui se concentrent au voisinage de l'arrondi concave 32 situé en arrière par rapport au sens de rotation sont des contraintes de traction. Les contraintes en traction au voisinage de l'arrondi concave 32 s'ajoutent aux contraintes de traction qui sont dues aux efforts centrifuges en rotation. Cette concentration de contraintes est susceptible de provoquer une rupture de la partie pleine 30 par cisaillement de sa base, au bout d'une certaine durée de fonctionnement.

Pour éviter cet inconvénient, les deux arrondis concaves 32, 34 des parties pleines d'une bride festonnée sont dissymétriques et ont, dans un mode de réalisation particulièrement simple, des rayons de courbure différents. Cette différence des rayons de courbure des arrondis 32 et 34 permet d'uniformiser les contraintes autour des deux arrondis concaves lors de la transmission d'un couple moteur entre les disques de turbine et le cône tourillon.

Dans un exemple de réalisation, le rayon de courbure de l'arrondi concave avant 34 est, pour le cône tourillon qui est une pièce menée, 2 à 2,8 fois plus petit que le rayon de courbure de l'arrondi concave 32 situé en arrière par rapport au sens de rotation (l'arrondi concave 34 situé en avant correspondant à ce qui se faisait habituellement dans la technique).

Dans un exemple de réalisation de l'invention, le cône tourillon 22 a un diamètre de 530 mm, les parties pleines 30 de la bride annulaire festonnée du cône tourillon ont un rayon extérieur de 520 mm, le rayon de courbure de l'arrondi avant 34 est de 5 mm et celui de l'arrondi concave arrière 32 est de 12 mm.

Les parties pleines des brides annulaires festonnées 18 des disques de turbine, qui sont des pièces menantes, ont une configuration inversée par rapport à celle représentée en figure 3, c'est-à-dire que les arrondis concaves de raccordement de leurs parties pleines aux périphéries des disques sont dissymétriques, les arrondis concaves situés du côté avant par rapport au sens de rotation ayant des rayons de courbure supérieurs à ceux des arrondis concaves situés de l'autre côté des parties pleines.

Lorsque le rayon de l'arrondi concave 34 situé en avant pour une partie pleine de la bride festonnée 20 du cône tourillon est de 2 à 2,8 fois plus petit que le rayon de courbure de l'arrondi concave situé en arrière, les arrondis concaves de raccordement des parties pleines des brides festonnées des disques de la turbine qui sont en arrière par rapport au sens de rotation ont des rayons 2 à 2,8 fois plus petits que ceux des arrondis concaves situés en avant.

On limite ainsi les déformations des parties pleines en fonctionnement, on équilibre les contraintes de chaque côté de ces parties pleines et on augmente les durées de vie du cône tourillon et des brides annulaires de fixation des disques de turbine.

## Revendications

1. Turbine basse pression de turbomachine, comprenant des disques aubagés (14) reliés par un cône tourillon (22) à un arbre de turbine, les disques aubagés (14) et le cône tourillon comprenant à leur périphérie interne et externe, respectivement des brides annulaires festonnées (18, 20), formées d'une alternance de parties pleines (30) et de parties creuses, les parties pleines comportant des trous (28) de passage d'organes de fixation, **caractérisée en ce que** chaque partie pleine (30) est raccordée à la périphérie du disque (14) ou du cône tourillon (22), respectivement, par deux arrondis concaves (32, 34) qui sont dissymétriques, ayant des rayons de courbure différents, le rayon de courbure de l'arrondi concave (34) qui se trouve en avant par rapport au sens de rotation (F) étant inférieur au rayon de courbure de l'autre arrondi concave (32) pour le cône tourillon (et inversement pour les disques de turbine).

2. Turbine selon la revendication 1, **caractérisée en ce que** le rayon de courbure de l'arrondi concave (34) qui se trouve en avant par rapport au sens de rotation F est 2 à 2,8 fois plus petit que le rayon de courbure de l'autre arrondi concave (32) pour le cône tourillon (et inversement pour les disques de turbine).

3. Disque de turbine basse pression, comprenant une bride annulaire festonnée, formée d'une alternance de parties pleines (30) et de parties creuses, les parties pleines comprenant des trous (28) de passage d'organes de fixation, **caractérisé en ce que** chaque partie pleine est raccordée à la périphérie du disque (14) par deux arrondis concaves (32, 34) qui sont dissymétriques, ayant des rayons de courbure différents, le rayon de courbure de l'arrondi concave (34) qui se trouve en avant par rapport au sens de rotation (F) est supérieur au rayon de courbure de l'autre arrondi concave.

4. Cône tourillon de turbine basse pression d' une turbomachine, comportant une bride annulaire festonnée (20), formée d'une alternance de parties pleines (30) et de parties creuses, les parties pleines comprenant des trous (28) de passage d'organes de fixation, **caractérisé en ce que** chaque partie peine est raccordée à la périphérie du cône tourillon (22) par deux arrondis concaves (32, 34) qui sont dissymétriques, ayant des rayons de courbure différents, le rayon de courbure de l'arrondi concave (34) qui se trouve en avant par rapport au sens de rotation (F) étant inférieur au rayon de courbure de l'autre arrondi concave (32) pour le cône tourillon.

5. Turbomachine, telle qu'un turboréacteur ou un turbopropulseur d'avion, **caractérisée en ce qu'**elle comprend une turbine basse pression selon l'une des revendications 1 à 2.

## Patentansprüche

1. Niederdruckturbine einer Turbomaschine, enthaltend Schaufelscheiben (14), die über einen Kegelzapfen (22) mit einer Turbinenwelle verbunden sind, wobei die Schaufelscheiben (14) und der Kegelzapfen an ihrem Innen- und Außenumfang jeweilige, wellenförmige Ringflansche (18, 20) aufweisen, die aus einer Wechselfolge von massiv ausgeführten Abschnitten (30) und hohl ausgeführten Abschnitten gebildet sind, wobei die massiv ausgeführten Abschnitte Durchtrittslochungen (28) zum Durchtritt von Befestigungsgliedern aufweisen, **dadurch gekennzeichnet, dass** jeder massiv ausgeführte Abschnitt (30) sich an den Umfang der Scheibe (14) bzw. des Kegelzapfens (22) über zwei konkave Rundungen (32, 34) anschließt, die asymmetrisch verlaufen und unterschiedliche Krümmungsradien haben, wobei der Krümmungsradius der konkaven Rundung (34), die in Drehrichtung (F) vorne liegt, geringer ist als der Krümmungsradius der anderen konkaven Rundung (32) für den Kegelzapfen (und umgekehrt für die Turbinenscheiben).

2. Turbine nach Anspruch 1, **dadurch gekennzeichnet, dass** der Krümmungsradius der konkaven Rundung (34), die in Drehrichtung (F) vorne liegt, 2 bis 2,8 mal geringer ist als der Krümmungsradius der anderen konkaven Rundung (32) für den Kegelzapfen (und umgekehrt für die Turbinenscheiben).

3. Niederdruckturbinenscheibe, enthaltend einen wellenförmigen Ringflansch, der aus einer Wechselfolge von massiv ausgeführten Abschnitten (30) und hohl ausgeführten Abschnitten gebildet ist, wobei die massiv ausgeführten Abschnitte Durchtrittslochungen (28) zum Durchtritt von Befestigungsgliedern aufweisen, **dadurch gekennzeichnet, dass** jeder massiv ausgeführte Abschnitt sich an den Umfang der Scheibe (14) über zwei konkave Rundungen (32, 34) anschließt, die asymmetrisch verlaufen und unterschiedliche Krümmungsradien haben, wobei der Krümmungsradius der konkaven Rundung (34), die in Drehrichtung (F) vorne liegt, größer ist als der Krümmungsradius der anderen konkaven Rundung.

4. Kegelzapfen für Niederdruckturbinen von Turbomaschinen, enthaltend einen wellenförmigen Ringflansch (20), der aus einer Wechselfolge von massiv ausgeführten Abschnitten (30) und hohl ausgeführten Abschnitten gebildet ist, wobei die massiv ausgeführten Abschnitte Durchtrittslochungen (28) zum Durchtritt von Befestigungsgliedern aufweisen, **dadurch gekennzeichnet, dass** jeder massiv ausgeführte Abschnitt sich an den Umfang des Kegelzapfens (22) über zwei konkave Rundungen (32, 34) anschließt, die asymmetrisch verlaufen und unterschiedliche Krümmungsradien haben, wobei der Krümmungsradius der konkaven Rundung (34), die in Drehrichtung (F) vorne liegt, geringer ist als der Krümmungsradius der anderen konkaven Rundung (32) für den Kegelzapfen.

5. Turbomaschine, wie etwa Turbostrahltriebwerk oder Turboprop-Triebwerk für Flugzeuge, **dadurch gekennzeichnet, dass** sie eine Niederdruckturbine nach einem der Ansprüche 1 bis 2 aufweist.

## Claims

1. A low-pressure turbine for a turbomachine, the turbine comprising bladed disks (14) connected by a drive cone (22) to a turbine shaft, the bladed disks (14) and the drive cone including at their inner and outer peripheries, respectively, festooned annular flanges (18, 20), each formed by alternating solid portions (30) and hollow portions, with the solid portions including holes (28) for passing fastener members, the turbine being **characterized in that** each solid portion (30) is connected to the periphery of the disk (14) or to the drive cone (22), respectively, by two concave fillets (32, 34) that are asymmetrical, having different radii of curvature, the radius of curvature of the concave filet (34) that is in front relative to the direction F being less than the radius of curvature of the other concave filet (32) for the drive cone (and vice versa for the turbine disks).

2. A turbine according to claim 1, **characterized in that** the radius of curvature of the concave filet (34) that is at the front relative to the direction of rotation F is 2 to 2.8 times smaller than the radius of curvature of the other concave filet (32) for the drive cone (and vice versa for the turbine disks).

3. A low-pressure turbine disk, comprising a festooned annular flange formed by alternating solid portions (30) and hollow portions, with the solid portions including holes (28) for passing fastener members, **characterized in that** each solid portion is connected to the periphery of the disk (14) by two concave fillets (32, 34) that are asymmetrical, having different radii of curvature, the radius of curvature of the concave filet (34) that is in front relative to the direction F being less than the radius of curvature of the other concave filet.

4. A drive cone for a low-pressure turbine in a turbomachine, comprising a festooned annular flange formed by alternating solid portions (30) and hollow portions, with the solid portions including holes (28) for passing fastener members, **characterized in that** each solid portion is connected to the periphery of the disk (14) by two concave fillets (32, 34) that are asymmetrical, having different radii of curvature, the radius of curvature of the concave filet (34) that is in front relative to the direction F being less than the radius of curvature of the other concave filet (32).

5. A turbomachine, such as an airplane turboprop or turbojet, **characterized in that** it includes a low-pressure turbine according to any one of claims 1 to 2.
